Europäisches Patentamt

European Patent Office

Office européen des brevets

(11) Publication number: **0 330 270**
**A1**

# (12) EUROPEAN PATENT APPLICATION

(21) Application number: **89200391.4**

(22) Date of filing: **17.02.89**

(51) Int. Cl.⁴: **G06K 11/06 , G06F 3/033**

(30) Priority: **23.02.88 NL 8800450**

(43) Date of publication of application:
**30.08.89 Bulletin 89/35**

(84) Designated Contracting States:
**DE FR GB IT NL**

(71) Applicant: **N.V. Philips' Gloeilampenfabrieken**
**Groenewoudseweg 1**
**NL-5621 BA Eindhoven(NL)**

(72) Inventor: **Den Deker, Wilhelmus Paulus Maria**
**c/o INT. OCTROOIBUREAU B.V. Prof.**
**Holstlaan 6**
**NL-5656 AA Eindhoven(NL)**
Inventor: **Kramer, Cornelis**
**c/o INT. OCTROOIBUREAU B.V. Prof.**
**Holstlaan 6**
**NL-5656 AA Eindhoven(NL)**

(74) Representative: **Scheele, Edial François et al**
**INTERNATIONAAL OCTROOIBUREAU B.V.**
**Prof. Holstlaan 6**
**NL-5656 AA Eindhoven(NL)**

(54) Work station with continuously variable sensitivity adjustment of the position control device.

(57) A work station, for example for a medical diagnostic system, includes a sensitivity control device for a control mechanism which applies a continuously variable signal to the control mechanism whereby the control mechanism can be controlled, leaving one hand free for other operations. This is achieved notably by using a foot-operable accelerator pedal or by including a pressure sensor in, for example a control device in the form of a joystick.

FIG. 1

EP 0 330 270 A1

## Work station with continuously variable sensitivity adjustment of the position control device.

The invention relates to a work station, comprising a display screen or connections for a display screen, an externally operable position control device for controlling the position of a part of a picture displayed on the display screen, an externally operable sensitivity adjustment device for adjusting the sensitivity of the position control operation be performed by the position control device, and a coupling device for connecting the position control device and the sensitivity adjustment device to the bus of the work station.

A work station of this kind is known; therein, a sensitivity adjustment device which comprises at least one key of the keyboard of the work station enables adjustment of the sensitivity of the position control device in the form of, for example a mouse, joystick or track ball for controlling, for example the position of the cursor or the shifting of graphics on the display screen. The known key-operated sensitivity adjustment device has only a number of discrete, programmed sensitivity settings. This means, for example that when the control mechanism is used for the shifting of graphics on the display screen, in the opinion of the operator, such shifting is too slow during a first coarse positioning and too inaccurate during a final exact positioning phase.

The programmed sensitivity settings thus give rise to the problem that the operator experiences the control of the position control device as being too slow or too fast and too inaccurate. This is because, due to the occurrence of overshoot, the operator must repeatedly reciprocate the control in order to reach the desired final position. This problem is becoming more significant as the use of electronic work stations, including personal computers, data terminals and other input and output equipment, increases.

The present invention has for its object to mitigate the described problem; to achieve this, there is provided a work station of the kind set forth which is characterized in that the sensitivity adjustment device is adapted to apply a continuously variable signal to the coupling device.

This characteristic feature of the invention enables the operator to achieve instantaneously a sensitivity of the position control device which is optimum for the instantaneous operator requirements, i.e. fast and coarse or slow and fine, and also for the skills of the operator himself. Advantages are achieved in that the sensitivity adjustment can be adapted directly to the actual situation of use and the skills of the operator.

The invention can be used in any system in which position control devices such as a track ball, mouse or joystick are used for control, for example in medical systems, computer systems for personal use, work stations for computer aided design (CAD), computer aided manufacture (CAM) or computer aided testing (CAT), work stations for process control and military systems.

The sensitivity adjustment is preferably foot-operated, so that the hand of the operator which does not manipulate the position control device remains free for other control functions, for example keyboard control functions.

In a further preferred embodiment the sensitivity adjustment device comprises a so-called accelerator pedal which offers the additional advantage that most operators know such a pedal as a member of for controlling speed. The "accelerator pedal" simply and efficiently enables user-influenced sensitivity control of, for example a track ball, mouse or joystick.

It is to be noted that a foot-operated mouse is known from IBM Technical Disclosure Bulletin, Vcl. 28, No. 11, April 1986, p. 4763. The foot-operated mouse, however, is no more than conventional mouse which is operated by foot instead of by hand, and hence does not concern the preferred continuously variable foot-operated sensitivity adjustment of the mouse. In accordance with the invention, the externally operable position control device may in principle also be a foot-operated position control device like the foot-operated mouse disclosed in the cited article.

Furthermore, the foot pedal of the foot-operated mouse known from the cited article is not an accelerator pedal but a foot pedal having one stable position and four unstable positions which correspond to the four different cursor motion positions.

In a preferred embodiment, the sensitivity control function is integrated in the position control, for example by including a pressure sensor therein. Thus, fast, coarse control as well a slow, fine control can be performed by hand, preferably, for example faster as more axial pressure is exerted on a joystick or on a push-button included therein.

The invention will be described in detail hereinafter with reference to the drawing; therein:

Fig. 1 shows a block diagram of an embodiment of a work station in accordance with the invention, and

Fig. 2 shows a block diagram of an embodiment of the coupling device and the accelerator pedal of Fig. 1.

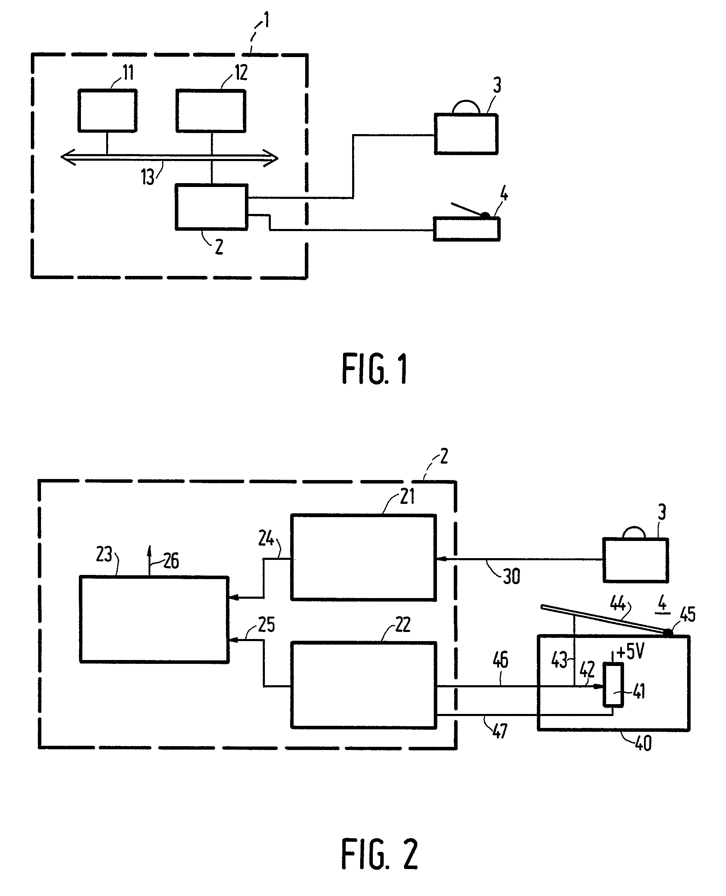

Fig. 1 shows the actual work station which is represented by a broken line 1. The term work station is to be understood to have a braod meaning as described in the preamble. In the embodiment shown in Fig. 1, the work station comprises a central processor unit 11 and a memory 12 which are connected to the bus 13. The work station also comprises a coupling device 2 (also referred to as interface) which is also connected to the bus 13 but which need not necessarily form part of the work station 1; the coupling device 2 may be, for example an accessory for extending an existing work station so as to obtain a work station in accordance with the invention.

The reference numeral 3 denotes the position control device and the reference numeral 4 denotes the sensitivity adjustment device in accordance with the invention. In the integrated version, both parts are integrated in the joystick. As has already been stated, the sensitivity adjustment device is preferably foot-operated; it is even more preferable that the foot-operated sensitivity adjustment is formed by a so-called "accelerator pedal"; therefore the sensitivity adjustment device 4 is shown as such in Fig. 1, the position control device 3 being diagrammatically shown as a control mechanism in fig. 1. This also holds good for the block diagram to be described with reference to Fig. 2.

Fig. 2 is a more detailed representation of the accelerator pedal 4, comprising a housing 40 and an analog variable voltage divider 41 which is diagrammatically represented by a variable resistor which is connected to a supply voltage of in this case, for example +5 V, the slider 42 of said resistor being coupled, via a mechanical connection 43, to a foot pedal 44 which is pivotably connected to the upper side of the housing 40 by way of the pivot 45. Therefore, the accelerator pedal 4 applies, in dependence of the position of the foot pedal 44, a continuously variable signal to the coupling device 2 via the lead connected to the slider 42 and the end of the voltage divider 41 which is not connected to the +5 V supply voltage. The position control device 3 applies a customary signal to the coupling device 2 via the line 30; this signal is a digital signal and consists of a pulse sequence containing direction information.

In the embodiment shown in Fig. 2, the coupling device 2 comprises a pulse counter and direction detector 21, an analog-to-digital converter, to be referred to hereinafter as ADC 22, and a digital multiplier 23. The output signal of the pulse counter and direction detector 21 on the line 24 is the non-corrected number of control mechanism pulses containing direction information, and the output signal of the ADC 22 on the line 25 is a sensitivity adjustment correction factor which is determined by the position of the foot pedal 44, the output signal of the digital multiplier 23 on the line 26 being the number of control mechanism pulses corrected for the instantaneous sensitivity adjustment. This corrected digital signal is applied to the bus 13 of the work station shown in Fig. 1.

## Claims

1. A work station, comprising a display screen or connections for a display screen, an externally operable position control device for controlling the position of a part of a picture displayed on the display screen, an externally operable sensitivity adjustment device for adjusting the sensitivity of the position control operation to be performed by the position control device, and a coupling device for connecting the position control device and the sensitivity adjustment device to the bus of the work station, characterized in that the sensitivity adjustment device is adapted to apply a continuously variable signal to the coupling device.

2. A work station as claimed in Claim 1, characterized in that the sensitivity adjustment device can be operated by foot.

3. A work station as claimed in Claim 2, characterized in that the sensitivity adjustment device is a so-called accelerator pedal.

4. A work station as claimed in Claim 1, characterized in that the sensitivity adjustment device is integrated in the position control device.

5. A work station as claimed in Claim 4, characterized in that the position control device includes a manually operable pressure sensor for sensitivity adjustment.

6. A work station as claimed in one or more of the preceding Claims, characterized in that the sensitivity adjustment device comprises a variable analog voltage divider, the coupling device comprising an analog-to-digital converter for converting the analog signal from the voltage divider into a corresponding digital signal which represents a sensitivity adjustment factor, and also comprises a pulse counter and direction detector which counts pulses received from the position control device and detects direction information received from the position control device and which supplies a digital signal which represents the non-corrected number of pulses containing direction information, and a digital multiplier for multiplying the digital output signals of the analog-to-digital converter and pulse counter and direction detector and for applying an output signal which represents the number of pulses corrected for the desired instantaneous sensitivity adjustment to the bus of the work station.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 142 779 (GENERAL ELECTRIC CORP.) * Page 2, lines 21-26; page 5, lines 1-6,19-32; page 6, line 33 - page 7, line 1; figures 3-5 * | 1,4 | G 06 K 11/06 G 06 F 3/033 |
| A | | 6 | |
| Y | FR-A-2 533 451 (COLECO INDUSTRIES INC.) * Abstract; page 3, lines 24-32 * | 1,4 | |
| A | | 6 | |
| A | PATENT ABSTRACTS OF JAPAN, vol. 7, no. 256 (P-236)[1401], page 156 P 236; & JP-A-58 140 832 (TATEISHI DENKI K.K.) 20-08-1983 * Whole document * | 1-4,6 | |
| A | PATENT ABSTRACTS OF JAPAN, vol. 8, no. 208 (P-302)[1645], page 34 P 302; & JP-A-59 91 537 (MITSUBISHI DENKI K.K.) 26-05-1984 * Whole document * | 1,4-6 | TECHNICAL FIELDS SEARCHED (Int. Cl.4) G 06 K 11 G 06 F 3 |

The present search report has been drawn up for all claims

| Place of search | Date of completion of the search | Examiner |
|---|---|---|
| THE HAGUE | 11-05-1989 | CIARELLI N. |

EPO FORM 1503 03.82 (P0401)